# FASCICULE DE BREVET EUROPEEN

(11) **EP 3 423 409 B1**
(45) Date de publication et mention de la délivrance du brevet: **14.08.2024**
(21) Numéro de dépôt: 17712204.1
(22) Date de dépôt: 28.02.2017
(51) Int. Cl.: C01G 17/00, C22B 41/00, C01B 33/021, B01J 21/06, B01J 27/04, B01J 27/043, B01J 37/03, H01M 4/134, H01G 11/50, H01M 4/38, H01M 4/02, B01J 35/23, B01J 35/30, B01J 35/40, B01J 35/58

(54) **PROCEDE DE PREPARATION DE NANOFILS DE SILICIUM ET/OU DE GERMANIUM**
VERFAHREN ZUR HERSTELLUNG VON SILICIUM- UND/ODER GERMANIUMNANODRÄHTEN
METHOD FOR PREPARING SILICON AND/OR GERMANIUM NANOWIRES

(30) Priorité: 29.02.2016 FR 1651679
(43) Date de publication de la demande: 09.01.2019
(73) Titulaire: Commissariat à l'Énergie Atomique et aux Énergies Alternatives, 75015 Paris (FR)
(72) Inventeur: CHENEVIER, Pascale, 38700 La Tronche (FR); REISS, Peter, 38120 Saint Egreve (FR)
(74) Mandataire: Gevers & Orès
(86) Numéro de dépôt international: PCT/FR2017/050450
(87) Numéro de publication internationale: WO 2017/149240

(56) Documents cités:
- WO-A1-2015/189827
- XIAOTANG LU ET AL: "Low Temperature Colloidal Synthesis of Silicon Nanorods from Isotetrasilane, Neopentasilane, and Cyclohexasilane", CHEMISTRY OF MATERIALS, vol. 27, no. 17, 8 September 2015 (2015-09-08), US, pages 6053 - 6058, XP055318479, ISSN: 0897-4756, DOI: 10.1021/acs.chemmater.5b02487
- HSING-YU TUAN ET AL: "Silicon Nanowires and Silica Nanotubes Seeded by Copper Nanoparticles in an Organic Solvent", CHEMISTRY OF MATERIALS, vol. 20, no. 6, 1 March 2008 (2008-03-01), US, pages 2306 - 2313, XP055318423, ISSN: 0897-4756, DOI: 10.1021/cm703304r
- NIU JUN-JIE ET AL: "A study in the growth mechanism of silicon nanowires with or without metal catalyst", MATERIALS LETTERS, vol. 62, no. 4, 28 June 2007 (2007-06-28), pages 767 - 771, XP029224577, ISSN: 0167-577X, DOI: 10.1016/J.MATLET.2007.06.056
- T. HANRATH ET AL: "Supercritical Fluid-Liquid-Solid (SFLS) Synthesis of Si and Ge Nanowires Seeded by Colloidal Metal Nanocrystals", ADVANCED MATERIALS, vol. 15, no. 5, 4 March 2003 (2003-03-04), DE, pages 437 - 440, XP055318461, ISSN: 0935-9648, DOI: 10.1002/adma.200390101
- LIU JIAN ET AL: "Tin catalyzed silicon nanowires prepared by magnetron sputtering", MATERIALS LETTERS, vol. 151, 2015, pages 122 - 125, XP029157884, ISSN: 0167-577X, DOI: 10.1016/J.MATLET.2015.03.065

## Description

La présente invention concerne un procédé de préparation d'un matériau à base de nanofils de silicium et/ou de germanium, les matériaux susceptibles d'être obtenus selon ce procédé et leur utilisation notamment dans des batteries au lithium, dans des super-condensateurs, dans des dispositifs thermoélectriques de récupération d'énergie ou de refroidissement, dans des détecteurs électroniques de substances chimiques ou biologiques en phase gazeuse ou liquide.

Les nanofils sont particulièrement intéressants pour de nombreuses applications grâce à leur grande surface développée par rapport à leur faible volume, ajoutée à leur capacité à former des réseaux entrelacés et souples. En particulier, les nanofils d'éléments du groupe IV, tel que Si, Ge, leurs alliages et leurs dérivés, ont montré des qualités particulières comme matériau dans l'électronique et les dispositifs pour l'énergie. Par exemples, les nanofils de silicium, en objet unique ou en réseau, fournissent la partie sensible de détecteurs chimiques électroniques d'une très grande sensibilité ; les nanofils de silicium ou de germanium introduits dans le matériau actif d'anode des batteries lithium-ion augmentent fortement la capacité de stockage d'énergie de la batterie.

Cependant, malgré leurs nombreux champs d'application, les nanofils de Si et/ou de Ge restent difficiles à produire à l'échelle industrielle. Les méthodes de choix en matière de qualité structurale restent les méthodes de croissance à partir de précurseurs gazeux, de type dépôt en phase vapeur (« Chemical Vapor Déposition », CVD) ou par pyrolyse. Ces méthodes sont délicates et coûteuses, elles demandent une maîtrise étroite du procédé. Un des points limitants est la préparation des catalyseurs nécessaires à la croissance. Un mécanisme de croissance est par exemple la croissance Vapeur-Liquide-Solide (VLS) : des catalyseurs sous forme de petites gouttelettes ou de petits cristaux d'un matériau capable de dissoudre les atomes constituant le nanofil sont placés en présence de vapeurs contenant ces atomes. Quand le catalyseur arrive à saturation, les atomes dissous se rassemblent à la surface du catalyseur et précipitent ou cristallisent sous la forme d'un nanofil. Il a été largement démontré que le contrôle de la taille de la gouttelette de catalyseur détermine l'homogénéité en diamètre des nanofils obtenus. Il a aussi été démontré dans la littérature que le diamètre des nanofils est déterminant pour leur taux de dopage. Le diamètre des nanofils est un paramètre très important dans la plupart de leurs applications ; dans les batteries Li-ion il influence fortement la stabilité et la diminution de capacité au cours du cyclage.

On comprend aisément que pour assurer le contrôle des qualités des nanofils telles que diamètre, dopage, cristallinité, il est de prime importance de contrôler la taille et la nature des catalyseurs.

Les catalyseurs les plus couramment utilisés sont des métaux, sous la forme de gouttelettes ou de masses solides de taille nanométrique. Le catalyseur peut être introduit déjà sous la forme de nanoparticules de métal. Alternativement, le métal qui formera le catalyseur peut être introduit sous la forme d'une couche mince métallique qui se liquéfie sous l'effet de la chaleur au début du procédé de croissance, puis démouille du substrat en petites gouttelettes de métal. Le métal peut aussi être introduit sous la forme d'une couche de sel métallique adsorbé sur le substrat de croissance, et réduit sous l'effet d'un gaz réducteur comme l'hydrogène au début du procédé de croissance. Dans les procédés pyrolytiques, le métal peut être introduit sous la forme d'un composé organométallique qui se décompose pendant la croissance et dépose le métal sous forme de nanoparticules ou gouttelettes sur le substrat de croissance.

Ces méthodes sont bien adaptées à certains métaux comme l'or et le fer. Cependant, la présence d'or, de fer ou d'autres métaux sont indésirables dans nombre d'applications. Par exemples, l'or et le fer ne sont pas compatibles avec les procédés CMOS (« Complementary Métal Oxide Semiconductor ») car ils polluent le silicium ; de nombreux métaux électrochimiquement actifs sont à proscrire dans les batteries car ils en dégradent les composants ou les performances¹ ; certaines nanoparticules métalliques présentes sur les nanofils provoquent une extinction de la luminescence des nanofils².

Pour obtenir des nanofils de Si ou Ge sans particule métallique gênante, des nanofils de silicium sans or ont été synthétisés à partir des nanofils de silicium contenant des nanoparticules d'or, mais cela nécessite de décaper la couche de silice recouvrant l'or puis de graver l'or selon les procédés bien connus décrits par Lim et al.³ ou par Chockla et al.⁴. Ils peuvent être obtenus par croissance sur une grande variété de substrats métalliques massifs selon Yuan et al.⁵ (Ag, Al, Cu, Fe, Ni, Pb, Ti) et de films minces métalliques selon Richards et al.⁶ (Ag, Al, Cr, Cu, Ni).

Les nanofils de silicium peuvent aussi être obtenus par croissance sans catalyseur selon Lim et al.⁷, cependant par des procédés à haute température (735-955°C). Une croissance de nanofils de silicium et germanium sans catalyseur est possible entre 490°C et 660°C d'après Kim et al.⁸, mais elle nécessite un substrat hautement contrôlé de silicium hydrogéné Si:H oxydé à l'eau ultrapure juste avant croissance.

Bogart et al. ont démontré la croissance de nanofils de silicium sur nanoparticules d'étain à 450°C avec la disparition de la nanoparticule d'étain en cours de synthèse, l'étain étant incorporé dans le silicium des nanofils durant le procédé de croissance⁹. Dans ce travail, la croissance est faite par procédé en phase supercritique, et l'étain est introduit sous forme d'un composé organométallique Sn(HMDS)₂.

Pour l'obtention industrielle de nanofils de Si et/ou de Ge, il est également particulièrement intéressant de diminuer la température du procédé de croissance afin de diminuer le coût et l'empreinte écologique du procédé. Une température de croissance basse peut également se faire dans des réacteurs et sur des substrats moins résistants à la chaleur, le choix des matériaux est donc plus vaste.

Un métal catalyseur de bas point de fusion permet d'abaisser la température de croissance des nanofils car les gouttelettes de métal fondu sont obtenues à plus basse température.

Pour réduire la température de croissance des nanofils de silicium : des métaux à bas point de fusion ont été utilisés tels que l'étain, le bismuth, l'indium.

L'indium est un catalyseur efficace pour la croissance des nanofils de silicium¹⁰ à 450°C mais il s'agit d'un métal rare et coûteux.

Le bismuth est un catalyseur efficace de croissance de nanofils de silicium¹¹ dès 280°C, et l'étain¹² métallique dès 250°C, dans le cas d'une croissance à partir d'un bloc de silicium évaporé par sputtering magnétron. Cette méthode est coûteuse et difficile à industrialiser.

L'étain est un métal intéressant comme catalyseur de croissance de nanofils de silicium car il présente un point de fusion bas, il forme un eutectique à 232°C avec le silicium, et il provoque peu d'effets indésirables dans les applications des nanofils de silicium. En particulier l'étain est compatible avec la chimie des batteries lithium-ion. C'est aussi un métal abondant, bon marché et peu toxique.

L'étain comme catalyseur permet d'obtenir des nanofils de silicium dès 200°C comme démontré par Lu et al.¹³ à partir de cyclohexasilane et de nanoparticules d'étain.

Les méthodes de croissance de type VLS ont montré la possibilité d'obtenir des nanofils de silicium pour une température d'au moins 410°C sur nanoparticules d'étain¹⁴, et d'au moins 400°C sur oxyde de cuivre selon le brevet FR 2 944 783. La synthèse de nanofils de silicium sur or se fait en général à une température supérieure à 450°C, mais dans certaines conditions des nanofils de silicium peuvent être obtenus à une température d'au moins 420°C en flux¹⁵, d'au moins 375°C sur nanoparticules d'or selon la demande WO2010/120849, et d'au moins 360°C sur nanoparticules d'or¹⁶.

L'étain est l'un des seuls catalyseurs permettant d'obtenir des nanofils de silicium sans métaux à retirer, à basse température.

Cependant, les nanoparticules d'étain s'oxydent spontanément et rapidement à l'air, elles doivent ensuite être réduites pour retrouver leur forme métallique, ce qui rend leur utilisation malaisée par les techniques précitées. Les nanoparticules et couches minces d'étain s'oxydent très vite si elles ne sont pas maintenues en atmosphère inerte. Par ailleurs les composés organométalliques de l'étain utilisables comme source pyrolytique d'étain sont toxiques.

Hsing-Yu Tuan et al. (CHEMISTRY OF MATERIALS, 2008, vol. 20, n°6, pages 2306-2313) décrivent un procédé de formation de nanofils de silicium utilisant comme catalyseur des nanoparticules de sulfure de cuivre.

Niu Jun-Jie et al. (MATERIALS LETTERS, 2007, vol. 62, n°4, pages 767-771) décrivent la croissance de nanofils de silicium par décomposition thermique d'une source de silicium à l'aide d'un catalyseur à base de sulfure de zinc.

T. Hanrath et al. (ADVANCED MATERIALS, 2003, vol. 15, n°5, pages 437-440) décrivent un procédé de synthèse de type Fluide supercritique-Liquide-Solide (SFLS) de nanofils de Si ou Ge à partir de nanocristaux d'or sous forme colloïdale.

La demande WO 2015/189827 vise un procédé de préparation d'un matériau à base de nanofils de silicium mettant en oeuvre un support sacrificiel à base d'un halogénure de métal alcalin, alcalinoterreux ou de transition comprenant des nanoparticules métalliques.

Liu Jian et al. (MATERIALS LETTERS, 2015, vol. 151, pages 122-125) décrivent un procédé de synthèse de nanofils de Si par pulvérisation magnétron, catalysé par de l'étain.

Il a maintenant été mis au point un procédé de synthèse de nanofils de silicium et/ou de germanium utilisant, à titre de catalyseur de croissance desdits nanofils, un sulfure de métal, en particulier le sulfure d'étain. Par exemple, les nanoparticules de sulfure d'étain sont plus stables à l'air que les nanoparticules d'étain et forment une couche d'oxyde surfacique moins épaisse.¹⁷

De façon inattendue, il a été montré que tout ou partie du sulfure de métal, en particulier le sulfure d'étain, est converti en métal, en particulier en étain, lors du chauffage du milieu réactionnel initial comprenant outre le sulfure de métal une source de silicium et/ou une source de germanium.

Ainsi, outre les avantages liés à leur plus grande stabilité à l'air, les sulfures de métal procurent les avantages du métal lui-même, comme catalyseur, à savoir un ou plusieurs des avantages suivants :
- la diminution de la température nécessaire à la croissance des nanofils,
- le fait qu'il n'est pas nécessaire de retirer ledit métal des nanofils après croissance pour obtenir des nanofils luminescents,
- le fait qu'il n'est pas nécessaire de retirer ledit métal des nanofils après croissance pour utiliser les nanofils dans un matériau pour batterie lithium-ion,
- le fait que ledit métal est peu coûteux et non toxique,
- le fait que ledit métal est miscible au silicium et au germanium et peut se dissoudre dans le nanofil.

Ainsi, un premier objet de la divulgation ne relevant pas de l'invention revendiquée concerne un procédé de préparation d'un matériau à base de nanofils de silicium et/ou de germanium, comprenant les étapes de :
(i) mise en contact d'une source de silicium et/ou d'une source de germanium avec un catalyseur comprenant un sulfure de métal binaire ou un sulfure de métaux multinaire, le ou lesdits métaux étant choisis parmi Sn, In, Bi, Sb, Ga, Ti, Cu, et Zn, ce par quoi on obtient des nanofils de silicium et/ou de germanium,
(ii) éventuellement récupération des nanofils de silicium et/ou de germanium obtenus à l'étape (i) ;
le catalyseur, et éventuellement la source de silicium et/ou la source de germanium, étant chauffés avant, pendant, et/ou après la mise en contact dans des conditions de température et de pression permettant la croissance des nanofils de silicium et/ou de germanium.

Un sulfure de métal binaire comprend, outre le soufre, un métal.

Un sulfure de métaux multinaire, en particulier tertiaire ou quaternaire, comprend, outre le soufre, au moins deux métaux, et en particulier deux métaux dans le cas d'un sulfure de métaux tertiaire, et trois métaux dans le cas d'un sulfure de métaux quaternaire.

Un premier objet de l'invention concerne un procédé de préparation d'un matériau à base de nanofils de silicium et/ou de germanium, comprenant les étapes de :
i) mise en contact d'une source de silicium et/ou d'une source de germanium avec un catalyseur, sous la forme de nanoparticules, comprenant un sulfure de métal binaire, ledit métal étant choisi parmi Sn, In, Bi, Sb et Ga, ce par quoi on obtient des nanofils de silicium et/ou de germanium,
ii) éventuellement récupération des nanofils de silicium et/ou de germanium obtenus à l'étape (i) ;
le catalyseur, et éventuellement la source de silicium et/ou la source de germanium, étant chauffé avant, pendant, et/ou après la mise en contact dans des conditions de température et de pression permettant la croissance des nanofils de silicium et/ou de germanium, le chauffage étant réalisé à une température comprise entre 200°C et 500°C, par exemple sous pression atmosphérique.

Selon un mode de réalisation, le catalyseur et la source de silicium et/ou la source de germanium sont chauffés après la mise en contact.

Selon un autre mode de réalisation, le catalyseur, et éventuellement la source de silicium et/ou la source de germanium, est chauffé avant la mise en contact, le chauffage étant éventuellement prolongé pendant et après ladite mise en contact.

Selon un mode de réalisation, la divulgation ne relevant pas de l'invention revendiquée concerne un procédé de préparation d'un matériau à base de nanofils de silicium et/ou de germanium, dans lequel l'étape (i) comprend les étapes de :
1. mise en contact d'une source de silicium et/ou d'une source de germanium avec un catalyseur comprenant un sulfure de métal binaire ou un sulfure de métaux multinaire, le ou lesdits métaux étant choisis parmi Sn, In, Bi, Sb, Ga, Ti, Cu, et Zn, pour obtenir un milieu réactionnel initial ;
2. chauffage du milieu réactionnel initial dans des conditions de température et de pression permettant la croissance des nanofils de silicium et/ou de germanium, ce par quoi on obtient des nanofils de silicium et/ou de germanium.

Selon un mode de réalisation, la divulgation ne relevant pas de l'invention revendiquée concerne un procédé de préparation d'un matériau à base de nanofils de silicium et/ou de germanium, dans lequel l'étape (i) comprend les étapes de :
1. chauffage d'un catalyseur comprenant un sulfure de métal binaire ou un sulfure de métaux multinaire, le ou lesdits métaux étant choisis parmi Sn, In, Bi, Sb, Ga, Ti, Cu, et Zn, à une température T et sous une pression P, pour obtenir un catalyseur à la température T et sous la pression P;
2. mise en contact d'une source de silicium et/ou d'une source de germanium avec le catalyseur à la température T et sous la pression P obtenu à l'issue de l'étape 1, ce par quoi on obtient des nanofils de silicium et/ou de germanium ;
la température T et la pression P permettant la croissance des nanofils de silicium et/ou de germanium.

Ainsi, selon la divulgation ne relevant pas de l'invention revendiquée, le ou lesdits métaux sont notamment choisis parmi Sn, In, Bi, Sb, et Ga. De façon plus générale, les métaux peuvent être choisis parmi les métaux dont la température de fusion à pression atmosphérique est inférieure à 300°C, et en particulier parmi Sn, In, Bi et Ga, ou parmi les métaux dont la température de fusion à pression atmosphérique est inférieure à 650°C, en particulier Sb.

Selon un mode de réalisation, le catalyseur est sous la forme de nanoparticules. La forme de nanoparticule apporte les avantages suivants :
- la diminution de la température de fusion du métal sous forme de nanoparticules, et par conséquent la diminution de la température nécessaire à la croissance des nanofils,
- dans le cas de nanoparticules homogènes en diamètre, la possibilité d'obtenir des nanofils homogènes en diamètre,
- dans le cas de nanoparticules homogènes en diamètre, la possibilité d'obtenir des nanofils dopés homogènes en taux de dopage.

Selon un autre mode de réalisation, le catalyseur est sous la forme de nanoparticules, dont le diamètre est compris de 5 à 30 nm.

Selon un mode de réalisation, le métal est l'étain. Le sulfure de métal est alors en particulier un sulfure de métal binaire de formule SnS, SnS₂ ou Sn₂S₃. De préférence, le catalyseur est sous la forme de nanoparticules de sulfure d'étain.

Outre les avantages liés à la stabilité accrue du sulfure d'étain à l'air, le sulfure d'étain procure les avantages de l'étain lui-même, comme catalyseur, à savoir :
- la diminution de la température nécessaire à la croissance des nanofils,
- le fait qu'il n'est pas nécessaire de retirer l'étain des nanofils après croissance pour obtenir des nanofils luminescents,
- le fait qu'il n'est pas nécessaire de retirer l'étain des nanofils après croissance pour utiliser les nanofils dans un matériau pour batterie lithium-ion,
- le fait que l'étain est peu coûteux et non toxique,
- le fait que l'étain est miscible au silicium et au germanium et peut se dissoudre dans le nanofil, ce qui permet notamment d'obtenir de façon avantageuse des nanofils photoluminescents.

Selon un mode de réalisation, le catalyseur comprenant un sulfure de métal est un catalyseur comprenant du sulfure d'étain sous la forme de nanoparticules.

Les nanoparticules de sulfure d'étain sont avantageusement stables à l'air, ne formant pas ou peu d'oxyde.

Ces nanoparticules de sulfure d'étain peuvent en outre être préparées facilement, à partir de sels métalliques simples selon des modes opératoires bien connus de l'homme du métier^{18,19}, alors que la synthèse des nanoparticules d'étain nécessite l'usage de réducteurs sensibles. Le contrôle de leur diamètre est aisé. En effet, elles peuvent être obtenues sous forme d'une suspension de nanoparticules calibrées. En particulier, la synthèse des nanoparticules de sulfure d'étain par croissance colloïdale, telle que décrite notamment par Reiss et al.²⁰, permet d'obtenir des nanoparticules calibrées de taille choisie dans une gamme de diamètre pertinente pour la croissance des nanofils (5 à 30 nm). La taille définie homogène des nanoparticules de sulfure d'étain favorise l'obtention de nanofils de diamètres homogènes. Lors de la synthèse de nanofils dopés, le taux de dopage de nanofils dépend fortement du diamètre : le contrôle d'une distribution étroite des diamètres des nanofils est donc nécessaire pour obtenir un taux de dopage homogène des nanofils.

Dans le cas de la croissance de nanofils de silicium, l'utilisation de nanoparticules de sulfure d'étain est particulièrement intéressante car elle permet de réduire la température de croissance en dessous des températures jusqu'ici accessibles. Des nanofils de silicium peuvent par exemple être obtenus par croissance dès 350°C sur catalyseurs constitués de nanoparticules de sulfure d'étain, par croissance pyrolytique selon le procédé décrit dans la demande de brevet français FR 1 553 108.

Selon un mode de réalisation, le métal est l'indium, le bismuth, l'antimoine ou le gallium. Le sulfure de métal est alors notamment un sulfure de métal binaire, respectivement de formule In₂S₃, Bi₂S₃, Sb₂S₃, Ga₂S₃ et GaS.

Outre les avantages liés à la stabilité des sulfures d'indium, de bismuth, d'antimoine et de gallium à l'air, ces derniers procurent les avantages de l'indium, du bismuth, de l'antimoine et du gallium eux-mêmes, comme catalyseur, à savoir :
- la diminution de la température nécessaire à la croissance des nanofils,
- le fait qu'il n'est pas nécessaire de retirer l'indium, le bismuth, l'antimoine ou le gallium des nanofils après croissance pour utiliser les nanofils dans un matériau pour batterie lithium-ion.

Selon un mode de réalisation, le catalyseur comprenant un sulfure de métal est du sulfure d'indium, de bismuth, d'antimoine ou de gallium sous la forme de nanoparticules.

Les nanoparticules de sulfure d'indium, de bismuth, d'antimoine ou de gallium sont avantageusement stables à l'air, ne formant pas ou peu d'oxyde.

Ces nanoparticules de sulfure d'indium, de bismuth, d'antimoine ou de gallium peuvent en outre être préparées facilement, à partir de sels métalliques simples^{21,22,23}. Le contrôle de leur diamètre est aisé.

Selon un mode de réalisation ne relevant pas de l'invention revendiquée, le métal est le titane ou le cuivre. Le sulfure de métal est alors notamment un sulfure de métal binaire, respectivement de formule TiS₂ et CuS ou Cu₂₋ₓS, x étant compris de 0 à 0,2.

Outre les avantages liés à la stabilité des sulfures de titane et de cuivre à l'air, ces derniers procurent les avantages du titane et du cuivre eux-mêmes, comme catalyseur, à savoir :
- le fait qu'il n'est pas nécessaire de retirer le titane ou le cuivre des nanofils après croissance pour obtenir des nanofils luminescents,
- le fait qu'il n'est pas nécessaire de retirer le titane ou le cuivre des nanofils après croissance pour utiliser les nanofils dans un matériau pour batterie lithium-ion,
- le fait que le titane et le cuivre sont peu coûteux et non toxiques,
- le fait que le titane et le cuivre sont miscibles au silicium et au germanium et peuvent se dissoudre dans le nanofil, ce qui permet notamment d'obtenir de façon avantageuse des nanofils photoluminescents.

Selon un mode de réalisation ne relevant pas de l'invention revendiquée, le catalyseur comprenant un sulfure de métal est du sulfure de titane ou de cuivre sous la forme de nanoparticules. La forme de nanoparticule apporte les avantages suivants :
- la diminution de la température de fusion du métal sous forme de nanoparticules, et par conséquent la diminution de la température nécessaire à la croissance des nanofils,
- dans le cas de nanoparticules homogènes en diamètre, la possibilité d'obtenir des nanofils homogènes en diamètre,
- dans le cas de nanoparticules homogènes en diamètre, la possibilité d'obtenir des nanofils dopés homogènes en taux de dopage.

Les nanoparticules de sulfure de titane ou de cuivre sont avantageusement stables à l'air, ne formant pas ou peu d'oxyde. Le contrôle de leur diamètre est aisé. Les nanoparticules de sulfure de titane²⁴ ou de cuivre^{25,26} peuvent être obtenues par des modes opératoires de la littérature.

Selon un mode de réalisation ne relevant pas de l'invention revendiquée, le métal est le zinc. Le sulfure de métal est alors un sulfure de métal binaire de formule ZnS.

Outre les avantages liés à la stabilité du sulfure de zinc à l'air, le sulfure de zinc procure les avantages du zinc lui-même, comme catalyseur, à savoir le fait que le zinc est peu coûteux et non toxique.

Selon un mode de réalisation ne relevant pas de l'invention revendiquée, le catalyseur comprenant un sulfure de métal est du sulfure de zinc sous la forme de nanoparticules. La forme de nanoparticule apporte les avantages suivants :
- la diminution de la température de fusion du métal sous forme de nanoparticules, et par conséquent la diminution de la température nécessaire à la croissance des nanofils,
- dans le cas de nanoparticules homogènes en diamètre, la possibilité d'obtenir des nanofils homogènes en diamètre,
- dans le cas de nanoparticules homogènes en diamètre, la possibilité d'obtenir des nanofils dopés homogènes en taux de dopage.

Les nanoparticules de sulfure de zinc sont avantageusement stables à l'air, ne formant pas ou peu d'oxyde.

Ces nanoparticules de sulfure de zinc peuvent en outre être préparées facilement, à partir de sels métalliques simples^{27,28,29}. Le contrôle de leur diamètre est aisé.

Selon un mode de réalisation ne relevant pas de l'invention revendiquée, le sulfure est un sulfure de métaux multinaire choisis parmi les sulfures ternaires ou quaternaires,.

Selon un mode de réalisation particulier ne relevant pas de l'invention revendiquée, le sulfure est un sulfure de métaux multinaire comprenant Cu et In ; Cu et Sn ; Zn et Sn ; ou Cu et Bi.

Selon un mode de réalisation plus particulier ne relevant pas de l'invention revendiquée, le sulfure est un sulfure de métaux ternaire ou quaternaire choisi parmi CuInS₂, Cu₂ZnSnS₄ (dit CZTS), CuBiS₂, Cu₃BiS₃ et Cu₂SnS₃.

Ces sulfures donnent accès, après retrait du soufre pendant la croissance, à des nanoparticules de catalyseurs constitués d'alliages métalliques.

Outre les avantages liés à la stabilité de ces sulfures à l'air, ces derniers procurent les avantages des alliages métalliques correspondants, comme catalyseur, à savoir :
- la diminution de la température nécessaire à la croissance des nanofils,
- le fait que ces alliages sont peu coûteux et non toxiques.

Selon un mode de réalisation ne relevant pas de l'invention revendiquée, le catalyseur comprenant un sulfure ternaire ou quaternaire de métal, en particulier CuInS₂ ou Cu₂ZnSnS₄, est sous la forme de nanoparticules.

Ces nanoparticules sont avantageusement stables à l'air, ne formant pas ou peu d'oxyde.

Ces nanoparticules peuvent en outre être préparées facilement, à partir de sels métalliques simples^{30,31,32,33,34,35}. Le contrôle de leur diamètre est aisé.

La forme de nanoparticule apporte les avantages suivants :
- la diminution de la température de fusion du métal sous forme de nanoparticules, et par conséquent la diminution de la température nécessaire à la croissance des nanofils,
- dans le cas de nanoparticules homogènes en diamètre, la possibilité d'obtenir des nanofils homogènes en diamètre,
- dans le cas de nanoparticules homogènes en diamètre, la possibilité d'obtenir des nanofils dopés homogènes en taux de dopage.

Les étapes de mise en contact et de chauffage sont en particulier mises en oeuvre dans tout procédé de synthèse de nanofils connu de l'homme du métier, en particulier la croissance Vapeur-Liquide-Solide (VLS), fluide supercritique-liquide-solide (SFLS) ou les procédés pyrolytiques.

Dans les procédés de type VLS, le catalyseur, comprenant un sulfure de métal et/ou le métal lui-même, est sous forme de petites gouttelettes ou de petits cristaux. Ce catalyseur, capable de dissoudre les atomes de Si et/ou Ge constituant le nanofil, est placé en présence d'une source gazeuse de silicium et/ou d'un source gazeuse de germanium. Quand le catalyseur arrive à saturation, les atomes dissous se rassemblent à la surface du catalyseur et précipitent ou cristallisent sous la forme d'un nanofil.

Dans les procédés de type SFLS, des nanofils de silicium et/ou de germanium sont obtenus dans des fluides supercritiques à haute température par dégradation thermique d'organosilanes et/ou d'organogermanes en présence de nanoparticules de catalyseur.

Dans les procédés pyrolytiques, la source de silicium et/ou la source de germanium, notamment des organosilanes et/ou des organogermanes, subissent une pyrolyse, c'est-à-dire une décomposition thermique générant des vapeurs de pyrolyse qui, au contact d'un catalyseur supporté, notamment sur un substrat sacrificiel, vont conduire à la croissance de nanofils de silicium sur ledit support.

Selon la divulgation ne relevant pas de l'invention revendiquée, le chauffage est en particulier réalisé à une température supérieure ou égale à la température T_{fe} de fusion de l'eutectique métal-silicium ou métal-germanium, et/ou à une pression comprise de 0,1 millibar à 200 bars, notamment de la pression atmosphérique, par exemple 1 bar, à 100 bars, par exemple sous pression atmosphérique. La température T_{fe} de fusion de l'eutectique étain-silicium est par exemple d'environ 230°C à pression atmosphérique.

Selon un mode de réalisation de la divulgation ne relevant pas de l'invention revendiquée, le chauffage est réalisé à une température comprise de T_{fe} à T_{fe} + 200°C, en particulier de T_{fe} à T_{fe} + 100°C, par exemple sous pression atmosphérique.

Selon un autre mode de réalisation, le chauffage est réalisé, à une température comprise de 230°C à 500°C, plus particulièrement de 250°C à 500°C, encore plus particulièrement de 300°C à 450°C, notamment de 300°C à 400°C, et/ou à une pression comprise de 0,1 millibar à 200 bars, notamment de la pression atmosphérique, par exemple 1 bar, à 100 bars, par exemple sous pression atmosphérique.

Selon un autre mode de réalisation, le chauffage est réalisé, à une température comprise de 230°C à 500°C, plus particulièrement de 250°C à 500°C, encore plus particulièrement de 300°C à 450°C, notamment de 300°C à 400°C, et à une pression comprise de 0,1 millibar à 200 bars, notamment de la pression atmosphérique, par exemple 1 bar, à 100 bars, par exemple sous pression atmosphérique.

Selon un autre mode de réalisation de la divulgation ne relevant pas de l'invention revendiquée, le catalyseur comprend un sulfure ternaire ou quaternaire de métal, en particulier CuInS₂ ou Cu₂ZnSnS₄, et le chauffage est réalisé, à une température comprise de 200°C à 500°C, en particulier de 230°C à 500°C, plus particulièrement de 300°C à 500°C, encore plus particulièrement de 350°C à 500°C, et/ou à une pression comprise de 0,1 millibar à 200 bars, notamment de la pression atmosphérique, par exemple 1 bar, à 100 bars, par exemple sous pression atmosphérique.

Selon un autre mode de réalisation de la divulgation ne relevant pas de l'invention revendiquée, le ou lesdits métaux sont choisis parmi Ti et Cu, et le chauffage est réalisé, à une température comprise de 300°C à 1000°C, en particulier de 400°C à 600°C, et/ou à une pression comprise de 0,1 millibar à 200 bars, notamment de la pression atmosphérique, par exemple 1 bar, à 100 bars, par exemple sous pression atmosphérique.

Selon un autre mode de réalisation de la divulgation ne relevant pas de l'invention revendiquée, le métal est Zn, et le chauffage est réalisé, à une température comprise de 300°C à 600°C, en particulier de 400°C à 600°C, et/ou à une pression comprise de 0,1 millibar à 200 bars, notamment de la pression atmosphérique, par exemple 1 bar, à 100 bars, par exemple sous pression atmosphérique.

Selon un autre mode de réalisation, le métal est Sn, et le chauffage est réalisé, à une température comprise de 200°C à 500°C, en particulier de 230°C à 500°C, plus particulièrement de 250°C à 500°C, encore plus particulièrement de 300°C à 450°C, notamment de 300°C à 400°C, et/ou à une pression comprise de 0,1 millibar à 200 bars, notamment de la pression atmosphérique, par exemple 1 bar, à 100 bars, par exemple sous pression atmosphérique.

Selon un autre mode de réalisation, la pression est comprise de 0,1 millibar à 1 bar, la pression étant notamment la pression atmosphérique, ledit procédé étant notamment de type Vapeur-Liquide-Solide (VLS).

Selon un autre mode de réalisation, la pression est comprise de 60 à 200 bars, et la température de 320°C à 700°C, l'étape de mise en contact (i) se faisant en présence d'un solvant, par exemple le toluène, ledit procédé étant notamment de type supercritique-liquide-solide (SFLS).

Selon un mode de réalisation, la source de silicium est choisie parmi les silanes, en particulier SiH₄ ; SiCl₄ ; et les organosilanes.

La source de silicium est notamment un silane de formule SiₙH₍₂ₙ₊₁₎ avec n allant de 1 à 10 ou un organosilane, en particulier un organomonosilane, un organodisilane ou un organotrisilane. L'organosilane peut être notamment un mono-, di-, triarylsilane tel que le monophénylsilane, le diphénylsilane, le triphénylsilane, ou un mono-, di-, tri-alkylsilanes tel que l'octylsilane.

Selon un mode de réalisation, la source de germanium est choisie parmi les germanes, en particulier GeH₄ ; GeCl₄ ; et les organogermanes.

La source de germanium est notamment un germane de formule GeₙH₍₂ₙ₊₁₎ avec n allant de 1 à 10 ou un organogermane, en particulier un organomonogermane, un organodigermane ou un organotrigermane. L'organogermane peut être notamment un mono-, di-, triarylgermane tel que le monophénylgermane, le diphénylgermane, le triphénylgermane, ou un mono-, di-, tri-alkylgermane tel que l'octylgermane.

La mise en contact à l'étape i) est notamment réalisée sous atmosphère inerte, c'est-à-dire en absence d'oxygène et dans des conditions anhydres, notamment sous vide, ou sous un flux de gaz inerte tel que l'argon ou l'azote.

Selon un mode de réalisation, le catalyseur est présent sur un substrat.

Le substrat est un substrat de croissance. Il peut être tout solide massif, poreux ou en poudre. Le substrat est notamment une plaquette (« wafer »).

En particulier, le substrat est un substrat sacrificiel.

Le substrat sacrificiel est un support provisoire, pouvant être nécessaire à la synthèse des nanofils de silicium, mais destiné à, ou pouvant être éliminé après la formation des nanofils de silicium à sa surface.

Ce substrat sacrificiel limite avantageusement la diffusion des nanoparticules catalysant la croissance des nanofils. Il en résulte que les nanoparticules de catalyseur restent de petite taille, de sorte que les nanofils de silicium obtenus ont un faible diamètre, homogène.

En outre, comme autre avantage, ce substrat sacrificiel s'élimine dans l'eau, sans réactif dangereux et sans risque de dégradation de la surface des nanofils. Ainsi, les nanofils sont récupérés purs sous la forme d'une poudre noire par simple lavage à l'eau.

Le substrat sacrificiel, en particulier à base d'un halogénure, d'un carbonate, d'un sulfate ou d'un nitrate de métal alcalin, alcalinoterreux ou de transition peut être notamment choisi parmi KCl, MgCl₂, CaCl₂, Na₂CO₃, MgCO₃, K₂CO₃, Na₂SO₄, CaSO₄, MgSO₄, K₂SO₄, Ca(NO₃)₂. Il est préférentiellement à base de chlorure de sodium, ou de carbonate de calcium, notamment de chlorure de sodium. Selon une variante préférée, le substrat sacrificiel est sous forme de poudre.

Le substrat sacrificiel à base d'un halogénure, d'un carbonate, d'un sulfate ou d'un nitrate de métal alcalin, alcalinoterreux ou de transition est typiquement préparé par broyage dudit halogénure anhydre, au moyen par exemple d'un cylindre de broyage à billes de zircone. La poudre dudit halogénure, carbonate, sulfate ou nitrate de métal alcalin, alcalinoterreux ou de transition est constituée de particules dont le diamètre est compris entre 10 nm et 50 µm, en particulier entre 50 nm et 50 µm, notamment entre 1 µm et 50 µm, en particulier de 10 µm environ. Cette taille permet avantageusement de limiter la fusion des particules de catalyseurs et donc de limiter la formation de nanofils ayant un gros diamètre. La poudre d'halogénure, de carbonate, de sulfate ou de nitrate de métal alcalin, alcalinoterreux ou de transition est de préférence conservée dans des conditions anhydres.

Selon un mode de réalisation, le catalyseur est présent sur un substrat, ledit catalyseur étant sous la forme d'une ou plusieurs couches minces sur ledit substrat. De préférence, le catalyseur est du sulfure d'étain sous la forme d'une ou plusieurs couches minces, sur ledit substrat.

Il est bien connu que le sulfure de métal, en particulier le sulfure d'étain, peut être déposé en une ou plusieurs couches minces par différentes méthodes de précipitation ou de dépôt couche par couche bien connues de l'homme du métier. Ces méthodes sont adaptées à la préparation de catalyseurs pour la croissance de nanofils.

Selon un mode de réalisation, le catalyseur est présent sur un substrat, ledit catalyseur étant sous la forme de nanoparticules sur ledit substrat.

Selon un mode de réalisation, l'invention concerne un procédé tel que défini précédemment, dans lequel :
- le catalyseur est présent sur un substrat, ledit catalyseur étant sous la forme de nanoparticules sur ledit substrat ;
- la source de silicium est un organosilane, et/ou la source de germanium est un organogermane ;
ledit procédé étant notamment un procédé pyrolytique.

Dans ce mode de réalisation, le substrat est notamment un substrat sacrificiel.

Selon un mode de réalisation, l'invention concerne un procédé tel que défini précédemment, dans lequel :
- le catalyseur est présent sur un substrat, ledit catalyseur étant sous la forme d'une ou plusieurs couches minces sur ledit substrat ;
- la source de silicium est choisie parmi SiH₄ et SiCl₄, et/ou la source de germanium est choisie parmi GeH₄ et GeCl₄;
ledit procédé étant notamment de type Vapeur-Liquide-Solide (VLS).

Selon un mode de réalisation, l'invention concerne un procédé tel que défini précédemment, dans lequel :
- le catalyseur est sous la forme de nanoparticules;
- la source de silicium est un organosilane, et/ou la source de germanium est un organogermane ;
l'étape de mise en contact (i) se faisant notamment en présence d'un solvant, par exemple le toluène, ledit procédé étant notamment de type supercritique-liquide-solide (SFLS).

Dans ce mode de réalisation, le catalyseur n'est pas sur un substrat, c'est-à-dire qu'il n'est pas supporté.

Selon un mode de réalisation, ladite étape de mise en contact (i) est réalisée en présence d'un agent dopant.

Selon un mode de réalisation, l'agent dopant est choisi parmi la phosphine, les organophosphines, les organoarsines, les organoboranes, l'ammoniac et les amines aromatiques.

Selon un mode de réalisation particulier, l'agent dopant est choisi parmi les organophosphines, les organoarsines, les organoboranes et les amines aromatiques.

Selon un autre mode de réalisation particulier, l'agent dopant est choisi parmi la phosphine et l'ammoniac.

Selon un mode de réalisation, l'invention concerne un procédé tel que défini précédemment, comprenant de plus une étape (ii) de récupération des nanofils de silicium et/ou de germanium obtenus à l'étape (i) et de dépôt sur un support conducteur ou semi-conducteur.

A titre d'exemple, une poudre de nanofils de silicium et/ou de germanium selon la présente invention (1mg) est suspendue dans 50µL d'eau ou de chloroforme par agitation dans un bain à ultrasons. La suspension est déposée en goutte sur un substrat de silicium jusqu'à évaporation complète du solvant. Après séchage, les nanofils de silicium et/ou de germanium forment une couche homogène poreuse de 25µm d'épaisseur sur le substrat.

La synthèse des nanofils de silicium et/ou de germanium selon le procédé de l'invention peut être réalisée en lots comme dans l'exemple ci-dessous, ou en flux continu ou semi-continu.

Pour une synthèse en mode semi-continu, le catalyseur, éventuellement sur un substrat, peut être placé dans une chambre de croissance, et exposé par ouverture d'une vanne à une autre chambre contenant la source de silicium et/ou la source de germanium.

Pour une synthèse en continu, le catalyseur, éventuellement sur un substrat, peut passer à vitesse contrôlée dans la chambre de croissance, et être exposé à la source de silicium et/ou la source de germanium. Les méthodes sur lit fluidisé ou sur tapis roulant sont adaptées à la synthèse des nanofils de l'invention.

### Matériau à base de nanofils de silicium et/ou de germanium

Un autre objet de la divulgation ne relevant pas de l'invention revendiquée concerne un matériau à base de nanofils de silicium et/ou de germanium susceptible d'être obtenu selon le procédé tel que défini ci-dessus.

Par « matériau à base de nanofils de silicium et/ou de germanium », on entend un matériau comprenant ou consistant en des nanofils de silicium et/ou de germanium.

Ce matériau peut être caractérisé en ce que les nanofils de silicium présentent un diamètre inférieur à 100, 80, 60, 50, 40, 30 ou 20 nm, et une longueur supérieure à 200 nm.

La taille des nanofils, en particulier leur diamètre et/ou leur longueur peut être mesurée selon des techniques conventionnelles, telles que la microscopie électronique à balayage et à transmission.

La présente invention concerne un matériau à base de nanofils de silicium et/ou de germanium susceptible d'être obtenu selon le procédé tel que défini ci-dessus, dans lequel le silicium et/ou le germanium est en partie amorphe, les nanofils de silicium et/ou de germanium présentant une fraction amorphe d'au moins 30% et ayant un diamètre compris entre 5 nm et 100 nm.

Les nanofils de silicium et/ou de germanium ont notamment un diamètre de 12 nm ± 5 nm, ou de 20 nm ± 5 nm. Typiquement, ce diamètre est homogène sur l'ensemble des nanofils de silicium et/ou de germanium, c'est-à-dire que moins de 30% d'écart-type est observé dans la distribution des diamètres.

Les nanofils de silicium et/ou de germanium ont notamment une longueur comprise entre 500 nm et 5 µm.

Selon un mode de réalisation avantageux, les nanofils de silicium et/ou de germanium présentent une fraction amorphe d'au moins 40, 50 ou 60%.

Il est notamment connu qu'une certaine proportion, en particulier une forte proportion, de silicium amorphe est un avantage pour l'application en anode de batterie lithium-ion (Julien Sourice, « Synthèse de nanocomposites coeur-coquille silicium carbone par pyrolyse laser double étage : application à l'anode de batterie lithium-ion », thèse de doctorat en chimie, Université Paris Sud - Paris XI, 2015 ; et en particulier à la page 181 où les capacités de batteries faites de nanoparticules de silicium cristallin et de silicium amorphe sont comparées).

### Utilisation des nanofils de silicium et/ou de germanium

Un autre objet de la présente demande concerne l'utilisation d'un matériau à base de nanofils de silicium et/ou de germanium tel que défini précédemment pour la préparation d'électrodes pour les dispositifs de stockage d'énergie, en particulier les batteries, notamment au lithium, les super-condensateurs ; les dispositifs thermoélectriques ; les détecteurs électroniques de substances chimiques ou biologiques.

Selon un mode de réalisation, l'invention concerne l'utilisation d'un matériau à base de nanofils de silicium tel que défini précédemment pour la préparation d'électrodes pour les dispositifs de stockage d'énergie, en particulier les batteries, notamment au lithium, les super-condensateurs ; les dispositifs thermoélectriques ; les détecteurs électroniques de substances chimiques ou biologiques.

Selon un autre mode de réalisation, l'invention concerne l'utilisation d'un matériau à base de nanofils de germanium tel que défini précédemment pour la préparation d'électrodes pour les dispositifs de stockage d'énergie, en particulier les batteries, notamment au lithium, les super-condensateurs ; les dispositifs thermoélectriques; les détecteurs électroniques de substances chimiques ou biologiques ; en particulier les dispositifs de stockage d'énergie, en particulier les batteries, notamment au lithium, les super-condensateurs ; les dispositifs thermoélectriques.

Dans le cas des batteries au lithium, la combinaison des caractéristiques de grande longueur, de grande surface spécifique et de petits diamètres homogènes est particulièrement attractive. En effet, lors de la charge de la batterie, le silicium ou le germanium connecté à l'électrode peut absorber de très grandes quantités de lithium, jusqu'à former la phase Li₁₅Si₄ dans le cas du silicium. Une particule de silicium voit alors son volume augmenter d'un facteur 4, ce qui provoque de fortes tensions à la surface de la particule. Au-delà d'une taille critique de l'ordre de 200 nm, la particule se fracture sous l'effet de la contrainte mécanique. Lors de la décharge de la batterie, la délithiation provoque une réduction du volume, mais les particules fracturées restent séparées. Les morceaux fracturés qui ne sont plus connectés électriquement à l'électrode ne participent plus aux cycles de charge/décharge et la capacité de la batterie diminue. Les nanofils de silicium et/ou de germanium selon l'invention présentent une grande longueur et un grand rapport d'aspect, ce qui implique qu'ils forment avantageusement un réseau percolant conducteur une fois déposés sur une surface. Dans ce réseau, tous les nanofils de silicium et/ou de germanium selon l'invention sont électriquement connectés par contact avec les autres nanofils, et peuvent donc participer à la charge/décharge. De plus, les nanofils de silicium et/ou de germanium selon l'invention ont un diamètre suffisamment fin pour éviter la fracture, donc la capacité de la batterie sera conservée au cours des cycles. Bien sûr, les qualités de faible coût et de mise en oeuvre simple sous forme de suspension liquide sont aussi des atouts importants pour la fabrication industrielle des batteries.

Les matériaux à base de nanofils de silicium et/ou de germanium selon l'invention sont notamment utiles pour la préparation d'anodes pour batteries lithium-métal, lithium-ion, lithium-air, lithium-soufre ou autres technologies de batteries lithium ou sodium.

Dans le cas des super-condensateurs, les électrodes à base de nanofils de silicium et/ou de germanium résistent à de fortes tensions, et montrent une grande stabilité au cyclage. La densité de courant augmente lorsque le diamètre des nanofils diminue. Les nanofils de silicium et/ou de germanium selon l'invention permettent avantageusement d'obtenir des densités de courant plus importantes grâce à leur diamètre très fin.

Les matériaux à base de nanofils de silicium et/ou de germanium selon l'invention sont ainsi notamment utiles pour la préparation d'anodes et/ou de cathodes de super-condensateurs, micro-super-condensateurs ou ultra-micro-condensateurs.

Le matériau à base de nanofils de silicium et/ou de germanium selon l'invention peut également être utilisé pour des applications dans des dispositifs thermoélectriques de récupération d'énergie ou de refroidissement. En effet, les matériaux thermoélectriques doivent posséder à la fois un coefficient Seebeck élevé, une bonne conductivité électrique et une faible conductivité thermique. Le silicium et le germanium sont des matériaux thermoélectriques intéressants lorsqu'ils sont fortement dopés grâce à une forte conductivité électrique et un coefficient Seebeck élevé.

Les nanofils de silicium et/ou de germanium selon l'invention, éventuellement en mélange avec d'autres composants, et compressés en un matériau massif thermoélectrique sont notamment utiles pour la préparation d'un bloc de refroidissement Peltier ou générateur thermoélectrique de récupération d'énergie thermique.

Le matériau à base de nanofils de silicium et/ou de germanium est par ailleurs utile pour la préparation d'un support conducteur sensible de détecteur chimique résistif, capacitif ou en mode transistor à effet de champs.

Un autre objet de la divulgation ne relevant pas de l'invention revendiquée concerne l'utilisation d'un sulfure de métal binaire ou un sulfure de métaux multinaire, le ou lesdits métaux étant choisis parmi Sn, In, Bi, Sb, Ga, Ti, Cu, et Zn, à titre de catalyseur pour la préparation d'un matériau à base de nanofils de silicium et/ou de germanium.

Un autre objet de l'invention concerne l'utilisation d'un sulfure de métal binaire, ledit métal étant choisi parmi Sn, In, Bi, Sb et Ga, à titre de catalyseur, le catalyseur étant sous la forme de nanoparticules, pour la préparation d'un matériau à base de nanofils de silicium et/ou de germanium.

### Définitions

Par « nanofil », on entend un fil dont le diamètre est inférieur à 100 nm, notamment entre 1 et 50 nm ou entre 60 et 80 nm. Les nanofils de silicium et/ou de germanium obtenus selon le procédé de l'invention ont avantageusement un diamètre compris entre 5 et 30 nm, ou entre 60 et 80 nm.

Par « silicium et/ou de germanium », on entend le silicium, le germanium ainsi que tous les alliages Si-Ge.

Par « nanofil de silicium et/ou de germanium», on entend un nanofil constitué de silicium et/ou de germanium, ou comprenant plus de 90% en masse de silicium et/ou de germanium, ledit nanofil étant éventuellement enrobé par une couche extérieure ne contenant pas de silicium et/ou de germanium, ou moins de 50% en masse de silicium et/ou de germanium.

Cette couche peut avoir une masse comprise de 1% à 80% de la masse du nanofil qu'elle enrobe. Elle peut être formée au cours de la synthèse du nanofil, contenant par exemple environ 30% de carbone, ou être ajoutée après la formation du nanofil par des procédés bien connus de l'homme du métier.

Lorsque le nanofil est enrobé par une couche extérieure, le coeur du nanofil est le nanofil de silicium et/ou de germanium proprement dit, tel que défini dans la présente demande.

Les nanofils de silicium et/ou de germanium peuvent notamment comprendre des traces du métal ayant été utilisé en tant que catalyseur, et/ou le cas échéant l'agent dopant ou un ou plusieurs composés issus de la réaction entre l'agent dopant et les nanofils.

Par « catalyseur », on entend un composé comprenant ou consistant en un sulfure de métal et permettant de catalyser la croissance des nanofils, éventuellement après décomposition de tout ou partie dudit sulfure de métal en le métal correspondant.

Le catalyseur est en particulier sous forme nanométrique, plus particulièrement sous la forme de nanoparticules de sulfure de métal ou d'une ou plusieurs couches minces de sulfure de métal.

Sauf précision contraire, « sulfure de métal » signifie sulfure de métal binaire ou sulfure de métaux multinaire.

Par « substrat sacrificiel », on entend un support provisoire, pouvant être nécessaire à la synthèse des nanofils de silicium, mais destiné à, ou pouvant être éliminé après la formation des nanofils de silicium à sa surface.

Par « couche mince », on entend un nanofilm de catalyseur sur un substrat, ledit nanofilm ayant notamment une épaisseur moyenne comprise de 1 à 50nm.

On qualifie d'amorphe un composé dans lequel les atomes ne respectent aucun ordre à moyenne et grande distance. A l'opposé, un composé cristallin est un composé dans lequel les atomes sont organisés en un réseau ordonné et respectent un ordre à moyenne et grande distance.

Ainsi, on entend par « fraction amorphe » la fraction de silicium et/ou de germanium sous forme amorphe ; une fraction amorphe de 0% correspond à un composé cristallin tandis qu'une fraction amorphe de 100% correspond à un composé amorphe.

La fraction amorphe peut être quantifiée par différentes techniques bien connues de l'homme du métier, par exemple décrites dans Threlfall, T. L. Analyst 1995, 120, p. 2435- 2459 ou dans Caira, M. R. Topics in Current Chemistry 1998, 198, p 163-208, comme la diffraction aux rayons X ou la calorimétrie différentielle à balayage en mode isotherme.

### FIGURES

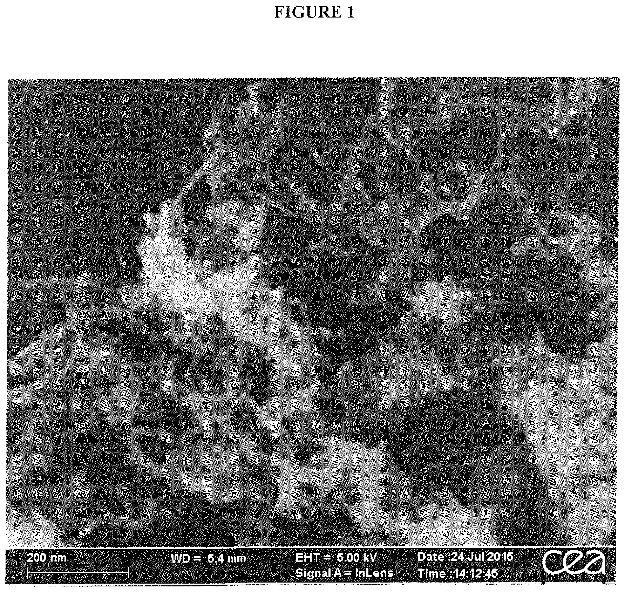

La Figure 1 est une image des nanofils obtenus à l'exemple 1, prise par microscopie électronique à balayage.
La Figure 2 est une mesure d'Analyse Thermogravimétrique (ATG) sous argon de nanoparticules de SnS pouvant être utilisées dans le cadre de la présente invention.

La courbe (1) montre la perte de masse lors du chauffage d'un échantillon de nanoparticules de SnS pouvant être utilisées dans le cadre de la présente invention: l'échantillon contient 60% de stabilisants organiques afin de conserver les nanoparticules en suspension (suspension stable pendant plusieurs années). Ces stabilisants organiques se décomposent thermiquement à 220 et 350°C, laissant le coeur inorganique qui ne montre pas de décomposition jusqu'à 1000°C.

La courbe (2) montre la perte de masse lors du chauffage d'un échantillon des mêmes nanoparticules de SnS dont la majorité des stabilisants organiques a été retirée par lavage (20mg de nanoparticules sont lavées dans 100mL de méthanol additionné de 1,4% d'acétone, séparés par centrifugation à 20 000g pendant 10 minutes, puis séchés à 50°C sous argon pendant 10 minutes). La perte de masse due à la décomposition des stabilisants organiques est encore visible sur la courbe (2) pour 20% de la masse totale, puis le coeur inorganique ne subit pas de décomposition avant 700°C.

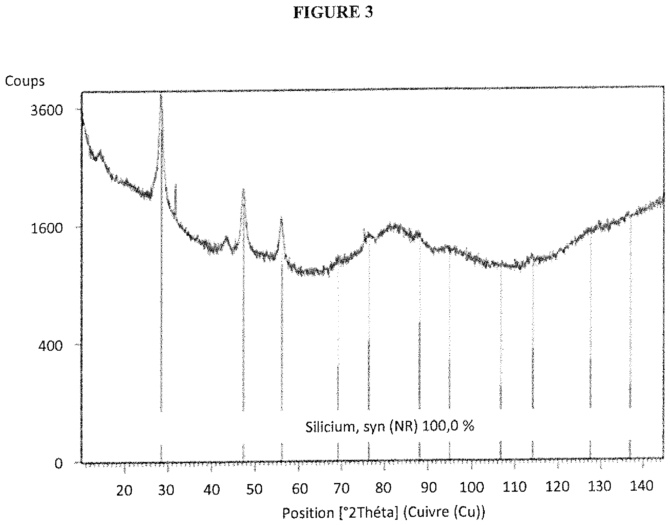

La Figure 3 illustre l'analyse par diffraction des rayons X de nanofils de silicium obtenus dans le cadre de la présente invention.

### EXEMPLES

### Exemple 1 : Synthèse d'un lot de nanofils de silicium

1/ Des nanoparticules de SnS de 5,5 nm de diamètre sont préparées à partir de deux solutions A et B préparées comme suit. La solution A contenant 3mL de trioctylphosphine (6,7mmol), 380mg de chlorure d'étain SnCl₂ (2mmol) et 5mL d'octadécène (15,6mmol) est placée sous argon et chauffée à 60°C, puis 100°C pendant 5 minutes. La température est montée à 150°C et 1,5mL d'acide oléique est ajouté. La solution B contenant 3mL de trioctylphosphine (6,7mmol), 150mg de thioacetamide (1mmol) et 5mL d'oléylamine (15,2mmol) est placée sous argon, chauffée à 60°C, puis à 100°C pendant 5 minutes. La solution B est ajoutée dans la solution A rapidement à la seringue. La réaction est stoppée au bout de 2 minutes par refroidissement au bain de glace.
2/ Après ajout de 20mL de méthanol, la solution est centrifugée (9000rpm, 2 minutes). Le culot est redispersé dans 6mL de dichlorométhane. La solution est centrifugée (3000rpm, 2 minutes) pour retirer le culot. Le surnageant est repris dans 24mL de chloroforme et 2mL d'oléylamine. 30mL de méthanol sont ajoutés pour précipiter les nanocristaux par centrifugation (9000rpm, 2 minutes). Le culot est redispersé dans 6mL de chloroforme et centrifugé (3000rpm, 2 minutes), pour retirer le culot. Le surnageant est une solution stable de nanocristaux de SnS de 5,5nm de diamètre.
   Il est à noter que des nanoparticules calibrées de taille choisie dans une gamme de diamètre pertinente pour la croissance des nanofils (notamment de 7 à 23 nm) peuvent être obtenues grâce au protocole A décrit dans Reiss et al.¹⁷
3/ 0,45mg de nanocristaux de SnS en suspension dans 450µL de chloroforme est mis en contact avec 90mg de microparticules de carbonate de calcium dans 5mL de cyclohexane. Le cyclohexane est évaporé sous flux d'argon sous chauffage à 60°C. Les particules de carbonate de calcium couvertes de nanocristaux de SnS sont mélangées avec 285µL de diphénylsilane (1.5mmol). L'ensemble est placé dans un tube de verre de 10mL scellé sous vide. Le tube est chauffé à 350°C pendant une heure puis refroidi.
4/ Le solide est lavé avec 15mL de solution d'acide chlorhydrique 2M et 10mL de chloroforme. Les nanofils de silicium sont récupérés à l'interface entre chloroforme et phase aqueuse après centrifugation (8000rpm, 10 minutes). Un second lavage identique est effectué. Les nanofils sont ensuite lavés par 25mL d'éthanol et centrifugés (8000rpm, 10 minutes). Le culot repris dans le chloroforme contient des nanofils de silicium de 20nm de diamètre, prêts à l'usage.

### Exemple 2 : Synthèse de nanofils dopés

On répète les étapes 1/ à 4/ décrites précédemment avec pour seule modification que dans l'étape 3/, de la diphénylphosphine P(C₆H₅)₂H est introduite en mélange dans le diphénylsilane en proportion 0,1 à 3 % en masse.

### Exemple 3 : Préparation des électrodes pour batteries lithium

54 mg de nanofils de silicium obtenus à l'exemple 1 sont broyés au mortier avec 7 mg de noir de carbone et 7 mg de carboxy-méthylcellulose dans de l'eau (1 mL).

La pâte obtenue est déposée par enduction sur un film métallique à 0.8mg/cm² et séchée pendant 6h à 60°C sous vide.

L'électrode est montée comme cathode dans une batterie lithium, avec un séparateur de Villedon imprégné d'un électrolyte constitué d'une solution de LiPF₆ dans un mélange 1/1 massique de carbonate d'éthylène et de carbonate de diéthyle, contre une anode de lithium métal. L'ensemble est scellé dans une pile bouton.

La batterie lithium est testée en cycles de décharge/charge sur 70 cycles à une vitesse de C/20 au premier cycle et C/5 aux cycles suivants. Par définition, une vitesse de charge de C/20 (C/5 respectivement) indique que la batterie est complètement chargée en 1/20 heure (1/5 heure respectivement).

### Exemple 4 : Préparation des électrodes pour super-condensateur

1 mg de nanofils de silicium dopés obtenus à l'exemple 2 sont mis en suspension dans 200 µL de chloroforme. Un morceau de wafer de silicium ultra-dopé de 1 cm² est décapé par trempage dans une solution aqueuse d'acide fluorhydrique à 10% en masse. La suspension de nanofils de silicium de l'invention est déposée sur ce substrat. Le dépôt est séché à l'air ambiant. Deux électrodes identiques sont préparées pour la fabrication d'un super-condensateur. Les deux électrodes selon l'invention sont assemblées en sandwich l'une face à l'autre, séparées par un séparateur en papier filtre Whatman imprégné d'électrolyte constitué du liquide ionique bis-trifluorométhylsulfonide imide de 1-méthyl-1-propylpyrolidinium. L'assemblage du super-condensateur se fait en atmosphère inerte.

Le comportement capacitif du super-condensateur est testé par voltamétrie cyclique.

### Exemple 5 : Etude de la stabilité des sulfures métalliques, selon la température, sous pression atmosphérique.

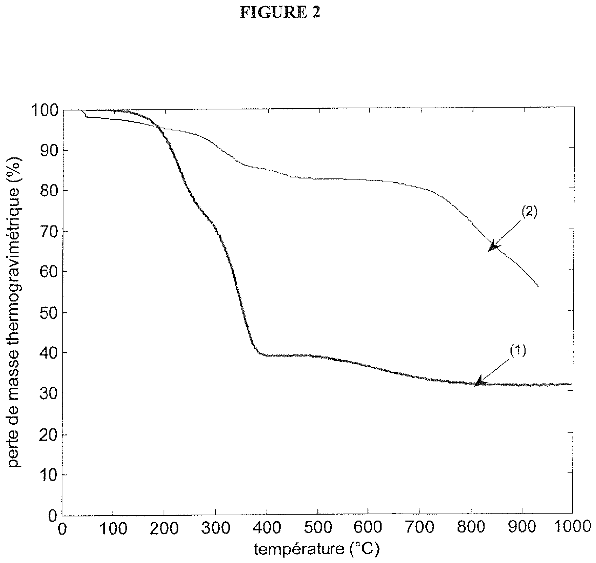

A pression ambiante, les sulfures métalliques sont connus pour être stables en température jusqu' à 700-900°C en général, et se décomposent au-delà. Cela est mis en évidence par la mesure d'Analyse Thermogravimétrique (ATG) sous argon des nanoparticules de SnS utilisées dans le cadre de la présente invention et présentée à la figure 2.

Ainsi, les nanoparticules de sulfure d'étain SnS ne se décomposent pas, dans les conditions d'obtention des courbes (1) et (2) de la figure 2, en nanoparticules d'étain Sn, à une température comprise de 380 à 450°C, telle que notamment utilisée dans la présente invention.

### Exemple 6 : Analyse par diffraction des rayons de nanofils de silicium

L'utilisation de nanoparticules de SnS comme catalyseurs de croissance de nanofils de silicium permet d'obtenir des nanofils ayant une forte proportion de silicium amorphe, tel que démontré par l'analyse par diffraction des rayons X présentée à la figure 3. Sur la figure 3, les lignes verticales indiquent les positions des pics de diffraction typiques du silicium cristallin. Le diffractogramme montre des pics aux positions attendues (29°, 47°, 56°, 76°, 88°, 104°), montrant la présence de silicium cristallin sous forme de cristaux de taille nanométrique à l'intérieur des nanofils. En plus de ces pics indexés, le diffractogramme montre un large pic centré à 82° et s'étalant de 65° à 105°. D'autres pics larges moins intenses sont visibles sous les pics de diffraction indexés vers 25° et 51°. Ces larges pics sont dus à une forme amorphe du silicium présente dans les nanofils. Cette forme amorphe représente une grande quantité de matériel par rapport à la partie cristallisée, comme démontré par la forte intensité du signal du silicium amorphe par rapport au signal du silicium cristallin sur le diffractogramme. La forte proportion de silicium sous forme amorphe dans les nanofils n'est pas observée pour les nanofils de silicium obtenus sur catalyseur d'or.

### REFERENCES

¹ Aaron M. Chockla, Timothy D. Bogart, Colin M. Hessel, Kyle C. Klavetter, C. Buddie Mullins, and Brian A. Korgel, 'Influences of Gold, Binder and Electrolyte on Silicon Nanowire Performance in Li-Ion Batteries', The Journal of Physical Chemistry C 2012, 116, 18079-86.
² X. Lu, C. M. Hessel, Y. Yu, T. D. Bogart, and B. A. Korgel, 'Colloidal Luminescent Silicon Nanorods', Nano Lett 2013**.**
³ Lim, K. W.; Lee, J. I.; Yang, J.; Kim, Y. K.; Jeong, H. Y.; Park, S.; Shin, H. S. ACS applied materials & interfaces 2014, 6, 6340.
⁴ Aaron M. Chockla, Timothy D. Bogart, Colin M. Hessel, Kyle C. Klavetter, C. Buddie Mullins, and Brian A. Korgel, 'Influences of Gold, Binder and Electrolyte on Silicon Nanowire Performance in Li-Ion Batteries', The Journal of Physical Chemistry C 2012, 116, 18079-86.
⁵ Fang-Wei Yuan, Hong-Jie Yang, and Hsing-Yu Tuan, 'Seeded Silicon Nanowire Growth Catalyzed by Commercially Available Bulk Metals: Broad Sélection of Métal Catalysts, Superior Field Emission Performance, and Versatile Nanowire/Metal Architectures', Journal of Materials Chemistry 2011, 21, 13793.
⁶ Benjamin T. Richards, Bernard Gaskey, Barnaby D. A. Levin, Kevin Whitham, David Muller, and Tobias Hanrath, 'Direct Growth of Germanium and Silicon Nanowires on Métal Films', Journal of Materials Chemistry C 2014, 2, 1869.
⁷ K. W. Lim, J. I. Lee, J. Yang, Y. K. Kim, H. Y. Jeong, S. Park, and H. S. Shin, 'Catalyst-Free Synthesis of Si-Siox Core-Shell Nanowire Anodes for High-Rate and High-Capacity Lithium-Ion Batteries', ACS Appl Mater Interfaces 2014, 6, 6340-5.
⁸ Byung-Sung Kim, Tae-Woong Koo, Jae-Hyun Lee, Duk Soo Kim, Young Chai Jung, Sung Woo Hwang, Byoung Lyong Choi, Eun Kyung Lee, Jong Min Kim, and Dongmok Whang, 'Catalyst-Free Growth of Single-Crystal Silicon and Germanium Nanowires', Nano Letters 2009, 9, 864-69.
⁹ T. D. Bogart, X. Lu, and B. A. Korgel, 'Précision Synthesis of Silicon Nanowires with Crystalline Core and Amorphous Shell', Dalton Trans 2013, 42, 12675-80.
¹⁰ Hugh Geaney, Tadhg Kennedy, Calum Dickinson, Emma Mullane, Ajay Singh, Fathima Laffir, and Kevin M. Ryan, 'High Density Growth of Indium Seeded Silicon Nanowires in the Vapor Phase of a High Boiling Point Solvent', Chemistry of Materials 2012, 24, 2204-10.
¹¹ R. Rakesh Kumar, K. Narasimha Rao, and A. R. Phani, 'Bismuth Catalyzed Growth of Silicon Nanowires by Electron Beam Evaporation', Materials Letters 2012, 82, 163-66.
¹² Jian Liu, Shi-Hua Huang, Li-Ping Chen, and Lv He, 'Tin Catalyzed Silicon Nanowires Prepared by Magnetron Sputtering', Materials Letters 2015, 151, 122-25.
¹³ Xiaotang Lu, Kenneth J. Anderson, Philip Boudjouk, and Brian A. Korgel, 'Low Température Colloidal Synthesis of Silicon Nanorods from Isotetrasilane, Neopentasilane, and Cyclohexasilane', Chemistry of Materials 2015, 27, 6053-58.
¹⁴ X. Lu, C. M. Hessel, Y. Yu, T. D. Bogart, and B. A. Korgel, 'Colloidal Luminescent Silicon Nanorods', Nano Lett 2013**.**
¹⁵ Heurlin, M.; Magnusson, M. H.; Lindgren, D.; Ek, M.; Wallenberg, L. R.; Deppert, K.; Samuelson, L. Nature 2012, 492, 90.
¹⁶ Ziyang Lu, Jixin Zhu, Daohao Sim, Wenhui Shi, Yee Yan Tay, Jan Ma, Huey Hoon Hng, and Qingyu Yan, 'In Situ Growth of Si Nanowires on Graphene Sheets for Li-Ion Storage', Electrochimica Acta 2012, 74, 176-81.
¹⁷ Protesescu, L.; Rossini, A. J.; Kriegner, D.; Valla, M.; de Kergommeaux, A.; Walter, M.; Kravchyk, K. V.; Nachtegaal, M.; Stangl, J.; Malaman, B.; Reiss, P.; Lesage, A.; Emsley, L.; Copéret, C.; Kovalenko, M. V. Unraveling the Core-Shell Structure of Ligand-Capped Sn/SnOx Nanoparticles by Surface-Enhanced Nuclear Magnetic Résonance, Mössbauer, and X-ray Absorption Spectroscopies. ACS Nano 2014, 8, 2639-2648.
¹⁸ Shen, S.; Zhang, Y.; Peng, L.; Xu, B.; Du, Y.; Deng, M.; Xu, H.; Wang, Q. Generalized synthesis of métal sulfide nanocrystals from single-source precursors: size, shape and chemical composition control and their properties. CrystEngComm 2011, 13, 4572-4579.
¹⁹de Kergommeaux, A.; Lopez-Haro, M.; Pouget, S.; Zuo, J.-M.; Lebrun, C.; Chandezon, F.; Aldakov, D.; Reiss, P. Synthesis, internai structure and formation mechanism of monodisperse tin sulfide nanoplatelets. J. Am. Chem. Soc. 2015, 137, 9943-9952.
²⁰ A. de Kergommeaux, J. Faure-Vincent, A. Pron, R. de Bettignies, B. Malaman, and P. Reiss, 'Surface Oxidation of Tin Chalcogenide Nanocrystals Revealed by 119sn-Mossbauer Spectroscopy', J Am Chem Soc 2012, 134, 11659-66.
²¹ Xue, B.; Xu, F.; Wang, B.; Dong, A. Shape-controlled synthesis of [small beta]-In2S3 nanocrystals and their lithium storage properties. CrystEngComm 2016, 18, 250-256.
²² Han, W.; Yi, L. X.; Zhao, N.; Tang, A. W.; Gao, M. Y.; Tang, Z. Y. Synthesis and shape-tailoring of copper sulfide/indium sulfide-based nanocrystals. J. Am. Chem. Soc. 2008, 130, 13152-13161.
²³ Shen, S.; Zhang, Y.; Peng, L.; Xu, B.; Du, Y.; Deng, M.; Xu, H.; Wang, Q. Generalized synthesis of métal sulfide nanocrystals from single-source precursors: size, shape and chemical composition control and their properties. CrystEngComm 2011, 13, 4572-4579.
²⁴ Han, J. H.; Lee, S.; Yoo, D.; Lee, J.-H.; Jeong, S.; Kim, J.-G.; Cheon, J. Unveiling Chemical Reactivity and Structural Transformation of Two-Dimensional Layered Nanocrystals. J. Am. Chem. Soc. 2013, 135, 3736-3739.
²⁵ Choi, S.-H.; An, K.; Kim, E.-G.; Yu, J. H.; Kim, J. H.; Hyeon, T. Simple and Generalized Synthesis of Semiconducting Métal Sulfide Nanocrystals. Adv. Funct. Mater. 2009, 19, 1645-1649.
²⁶ Aiwei, T.; Shengchun, Q.; Kai, L.; Yanbing, H.; Feng, T.; Jie, C.; Yongsheng, W.; Zhanguo, W. One-pot synthesis and self-assembly of colloidal copper(I) sulfide nanocrystals. Nanotechnology 2010, 21, 285602.
²⁷ Joo, J.; Na, H. B.; Yu, T.; Yu, J. H.; Kim, Y. W.; Wu, F.; Zhang, J. Z.; Hyeon, T. Generalized and Facile Synthesis of Semiconducting Métal Sulfide Nanocrystals. J. Am. Chem. Soc. 2003, 125, 11100-11105.
²⁸ Shen, S.; Zhang, Y.; Peng, L.; Xu, B.; Du, Y.; Deng, M.; Xu, H.; Wang, Q. Generalized synthesis of métal sulfide nanocrystals from single-source precursors: size, shape and chemical composition control and their properties. CrystEngComm 2011, 13, 4572-4579.
²⁹ Pradhan, N.; Katz, B.; Efrima, S. Synthesis of High-Quality Métal Sulfide Nanoparticles from Alkyl Xanthate Single Precursors in Alkylamine Solvents. J. Phys. Chem. B 2003, 107, 13843-13854.
³⁰ Park, Y.; Jin, H.; Park, J.; Kim, S. Simultaneous phase and size control in the synthesis of Cu2SnS3 and Cu2ZnSnS4 nanocrystals. Crystengcomm 2014, 16, 8642-8645.
³¹ Gao, Y.; Yang, H.; Zhang, Y.; Li, J.; Zhao, H.; Feng, J.; Sun, J.; Zheng, Z. Facile non-injection synthesis of high quality CZTS nanocrystals. Rsc Adv 2014, 4, 17667-17670.
³² Steinhagen, C.; Panthani, M. G.; Akhavan, V.; Goodfellow, B.; Koo, B.; Korgel, B. A. Synthesis of Cu2ZnSnS4 Nanocrystals for Use in Low-Cost Photovoltaics. J. Am. Chem. Soc. 2009, 131, 12554-12556.
³³ Ibáñez, M.; Zamani, R.; Li, W.; Shavel, A.; Arbiol, J.; Morante, J. R.; Cabot, A. Extending the Nanocrystal Synthesis Control to Quaternary Compositions. Crystal Growth & Design 2012, 12, 1085-1090.
³⁴ Gabka, G.; Bujak, P.; Gryszel, M.; Ostrowski, A.; Malinowska, K.; Zukowska, G. Z.; Agnese, F.; Pron, A.; Reiss, P. Synthesis and surface chemistry of high quality wurtzite and kesterite Cu2ZnSnS4 nanocrystals using tin(II) 2-ethylhexanoate as a new tin source. Chem. Commun. 2015, 51, 12985-12988.
³⁵ Yan, C.; Gu, E.; Liu, F.; Lai, Y.; Li, J.; Liu, Y. Colloidal synthesis and characterizations of wittichenite copper bismuth sulphide nanocrystals. Nanoscale 2013, 5, 1789-1792.

## Revendications

1. Procédé de préparation d'un matériau à base de nanofils de silicium et/ou de germanium, comprenant les étapes de :
i) mise en contact d'une source de silicium et/ou d'une source de germanium avec un catalyseur, sous la forme de nanoparticules, comprenant un sulfure de métal binaire, ledit métal étant choisi parmi Sn, In, Bi, S²b et Ga, ce par quoi on obtient des nanofils de silicium et/ou de germanium,
ii) éventuellement récupération des nanofils de silicium et/ou de germanium obtenus à l'étape (i) ;
le catalyseur, et éventuellement la source de silicium et/ou la source de germanium, étant chauffé avant, pendant, et/ou après la mise en contact dans des conditions de température et de pression permettant la croissance des nanofils de silicium et/ou de germanium, le chauffage étant réalisé à une température comprise entre 200°C et 500°C, par exemple sous pression atmosphérique.

2. Procédé selon la revendication 1, dans lequel le métal est l'étain.

3. Procédé selon la revendication 2, dans lequel le chauffage est réalisé, par exemple sous pression atmosphérique, à une température comprise entre 230°C et 500°C, plus particulièrement entre 250°C et 500°C, encore plus particulièrement de 300°C à 450°C, notamment de 300°C à 400°C.

4. Procédé selon l'une quelconque des revendications 1 à 3, dans lequel la source de silicium est choisie parmi les silanes, en particulier SiH₄; SiCl₄; et les organosilanes.

5. Procédé selon l'une quelconque des revendications 1 à 4, dans lequel la source de germanium est choisie parmi les germanes, en particulier GeH₄ ; GeCl₄ ; et les organogermanes.

6. Procédé selon l'une quelconque des revendications 1 à 5, dans lequel ledit catalyseur est présent sur un substrat sacrificiel à base d'un halogénure, d'un carbonate, d'un sulfate ou d'un nitrate de métal alcalin, alcalinoterreux ou de transition.

7. Procédé selon l'une quelconque des revendications 1 à 6, dans lequel le catalyseur est présent sur un substrat, ledit catalyseur étant sous la forme de nanoparticules sur ledit substrat.

8. Matériau à base de nanofils de silicium et/ou de germanium susceptible d'être obtenu selon le procédé tel que défini aux revendications 1 à 7, dans lequel le silicium et/ou le germanium est en partie amorphe, les nanofils de silicium et/ou de germanium présentant une fraction amorphe d'au moins 30% et ayant un diamètre compris entre 5 nm et 100 nm.

9. Matériau selon la revendication 8, dans lequel les nanofils de silicium et/ou de germanium présentant une fraction amorphe d'au moins 40, 50 ou 60%.

10. Utilisation d'un matériau à base de nanofils de silicium et/ou de germanium tel que défini à la revendication 8 ou 9 pour la préparation d'électrodes pour les dispositifs de stockage d'énergie, en particulier les batteries, notamment au lithium, les super-condensateurs ; les dispositifs thermoélectriques ; les détecteurs électroniques de substances chimiques ou biologiques.

11. Utilisation d'un sulfure de métal binaire, ledit métal étant choisi parmi Sn, In, Bi, Sb et Ga, à titre de catalyseur, le catalyseur étant sous la forme de nanoparticules, pour la préparation d'un matériau à base de nanofils de silicium et/ou de germanium.

## Patentansprüche

1. Verfahren zur Herstellung eines Materials auf Basis von Silicium- und/oder Germaniumnanodrähten, umfassend die folgenden Schritte:
i) Kontaktierung einer Siliciumquelle und/oder einer Germaniumquelle mit einem Katalysator in Form von Nanopartikeln, umfassend ein binäres Metallsulfid, wobei das Metall aus Sn, In, Bi, Sb und Ga ausgewählt ist, wodurch Silicium- und/oder Germaniumnanodrähte erhalten werden,
ii) gegebenenfalls Gewinnung der im Schritt (i) erhaltenen Silicium- und/oder Germaniumnanodrähte;
wobei der Katalysator, und gegebenenfalls die Siliciumquelle und/oder die Germaniumquelle, vor, während und/oder nach der Kontaktierung bei Temperatur- und Druckbedingungen erhitzt wird, die das Anwachsen der Silicium- und/oder Germaniumnanodrähte ermöglichen, wobei das Erhitzen bei einer Temperatur zwischen 200°C und 500°C, beispielsweise bei atmosphärischem Druck, durchgeführt wird.

2. Verfahren nach Anspruch 1, wobei das Metall Zinn ist.

3. Verfahren nach Anspruch 2, wobei das Erhitzen, beispielsweise bei atmosphärischem Druck, bei einer Temperatur zwischen 230°C und 500°C, spezifischer zwischen 250°C und 500°C, noch spezifischer von 300°C bis 450°C, insbesondere von 300°C bis 400°C durchgeführt wird.

4. Verfahren nach einem der Ansprüche 1 bis 3, wobei die Siliciumquelle aus den Silanen, besonders SiH₄; SiCl₄; und den Organosilanen ausgewählt ist.

5. Verfahren nach einem der Ansprüche 1 bis 4, wobei die Germaniumquelle aus den Germanen, besonders GeH₄; GeCl₄; und den Organogermanen ausgewählt ist.

6. Verfahren nach einem der Ansprüche 1 bis 5, wobei der Katalysator auf einem Opfersubstrat auf Halogenid-, Karbonat, Sulfat- oder Nitratbasis eines Alkali-, Erdalkali- oder Übergangsmetalls vorhanden ist.

7. Verfahren nach einem der Ansprüche 1 bis 6, wobei der Katalysator auf einem Substrat vorhanden ist, wobei der Katalysator in Form von Nanopartikeln auf dem Substrat vorliegt.

8. Material auf Basis von Silicium- und/oder Germaniumnanodrähten, das gemäß dem Verfahren wie in einem der Ansprüche 1 bis 7 definiert erhalten werden kann, wobei das Silicium und/oder das Germanium teilweise amorph ist, wobei die Silicium- und/oder Germaniumnanodrähte einen amorphen Anteil von mindestens 30% aufweisen und einen Durchmesser zwischen 5 nm und 100 nm aufweisen.

9. Material nach Anspruch 8 wobei die Silicium- und/oder Germaniumnanodrähte einen amorphen Anteil von mindestens 40, 50 oder 60% aufweisen.

10. Verwendung eines Materials auf Basis von Silicium- und/oder Germaniumnanodrähten wie in Anspruch 8 oder 9 definiert zur Herstellung von Elektroden für die Energiespeichervorrichtungen, besonders die Batterien, insbesondere Lithiumbatterien, die Superkondensatoren; die thermoelektrischer Vorrichtungen, die elektronischer Detektoren chemischer oder biologischer Substanzen.

11. Verwendung eines binären Metallsulfids, wobei das Metall aus Sn, In, Bi, Sb und Ga ausgewählt ist, als Katalysator, wobei der Katalysator in Form von Nanopartikeln vorliegt, für die Herstellung eines Materials auf Basis von Silicium- und/oder Germaniumnanodrähten.

## Claims

1. A method of preparing a material based on silicon and/or germanium nanowires, comprising the steps of:
i) contacting a silicon source and/or a germanium source with a catalyst, in the form of nanoparticles, comprising a binary metal sulphide, said metal being selected from Sn, In, Bi, Sb and Ga, whereby silicon and/or germanium nanowires are obtained,
ii) optionally recovering the silicon and/or germanium nanowires obtained in step (i);
the catalyst, and optionally the silicon source and/or the germanium source, being heated before, during and/or after contact under temperature and pressure conditions that allow the silicon and/or germanium nanowires to grow, the heating being carried out at a temperature of between 200°C and 500°C, for example under atmospheric pressure.

2. The method according to claim 1, wherein the metal is tin.

3. The method according to claim 2, wherein the heating is carried out, for example under atmospheric pressure, at a temperature of between 230°C and 500°C, more particularly between 250°C and 500°C, even more particularly from 300°C to 450°C, notably from 300°C to 400°C.

4. The method according to any one of claims 1 to 3, wherein the silicon source is chosen from silanes, in particular SiH₄; SiCl₄; and organosilanes.

5. The method according to any one of claims 1 to 4, wherein the germanium source is selected from germanes, in particular GeH₄ ; GeCl₄ ; and organogermanes.

6. The method according to any one of claims 1 to 5, wherein said catalyst is present on a sacrificial substrate based on an alkali metal, alkaline earth metal or transition metal halide, carbonate, sulphate or nitrate.

7. The method according to any one of claims 1 to 6, wherein the catalyst is present on a substrate, said catalyst being in the form of nanoparticles on said substrate.

8. A material based on silicon and/or germanium nanowires obtainable according to the method as defined in claims 1 to 7, wherein the silicon and/or germanium is partly amorphous, the silicon and/or germanium nanowires having an amorphous fraction of at least 30% and having a diameter of between 5 nm and 100 nm.

9. The material according to claim 8, wherein the silicon and/or germanium nanowires have an amorphous fraction of at least 40, 50 or 60%.

10. A use of a material based on silicon and/or germanium nanowires as defined in claim 8 or 9 for the preparation of electrodes for energy storage devices, in particular batteries, in particular lithium batteries, supercapacitors; thermoelectric devices; electronic detectors of chemical or biological substances.

11. The use of a binary metal sulphide, said metal being selected from Sn, In, Bi, Sb and Ga, as a catalyst, the catalyst being in the form of nanoparticles, for the preparation of a material based on silicon and/or germanium nanowires.
